(19) Europäisches Patentamt
European Patent Office
Office européen des brevets

(11) Veröffentlichungsnummer: **0 290 727 B1**

(12) **EUROPÄISCHE PATENTSCHRIFT**

(45) Veröffentlichungstag der Patentschrift: **16.09.92**

(51) Int. Cl.⁵: **C09D 17/00**

(21) Anmeldenummer: **88103107.4**

(22) Anmeldetag: **02.03.88**

# (54) Pastenförmige Pigmentpräparationen, Verfahren zu ihrer Herstellung und ihre Verwendung.

(30) Priorität: **05.03.87 DE 3707020**

(43) Veröffentlichungstag der Anmeldung:
**17.11.88 Patentblatt 88/46**

(45) Bekanntmachung des Hinweises auf die Patenterteilung:
**16.09.92 Patentblatt 92/38**

(84) Benannte Vertragsstaaten:
**CH DE FR GB IT LI**

(56) Entgegenhaltungen:
**DE-A- 2 352 774**
**FR-A- 2 249 144**

(73) Patentinhaber: **HOECHST AKTIENGESELL-SCHAFT**
**Postfach 80 03 20**
**W-6230 Frankfurt am Main 80(DE)**

(72) Erfinder: **Schneider, Manfred**
**Cuntzstrasse 1**
**W-6239 Eppstein/Taunus(DE)**
Erfinder: **Ott, Ulrich, Dr.**
**Rossertstrasse 3d**
**W-6237 Liederbach(DE)**
Erfinder: **Sieber, Alexander, Dr.**
**Wartburgstrasse 76**
**W-6230 Frankfurt am Main 80(DE)**
Erfinder: **Zimmermann, Manfred, Dr.**
**In der Tränk 29**
**W-6050 Offenbach/Main(DE)**

EP 0 290 727 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Arylpararosanilinsulfonsäure-Pigmentpräparationen, die sich besonders zur Herstellung von Druckfarben, insbesondere Buck- und Offsetdruckfarben eignen.

Es ist allgemein bekannt, wäßrige Preßkuchen von Pigmenten aus der Reihe der Arylpararosanilinsulfonsäuren der Formel I

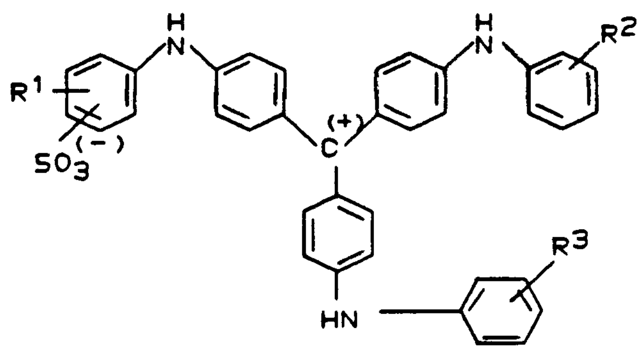

(I)

in welcher $R^1$, $R^2$ und $R^3$ unabhängig voneinander Wasserstoff, Halogen, wie Chlor oder Brom, $C_1$-$C_3$-Alkyl,$C_1$-$C_3$-Alkoxy oder Nitro bedeuten, einem Flushprozeß zu unterwerfen, wobei das Pigment in ein Bindemittel überführt und gleichzeitig weitgehend entwässert sowie konzentriert wird (siehe z. B. K. Winnacker, L. Küchler "Chemische Technologie", 3. Auflage, Bd, 4, Seiten 362, 375, 376 und 408 (1972)). Auf diese Weise werden Flushkonzentrate erhalten, welche das Pigment in gut dispergierter Form enthalten und welche sich leicht in einen Buch- oder Offsetdruckfirnis einarbeiten lassen und dabei farbstarke Buch- bzw. Offsetfarben ergeben.

Der Einsatz von Flushkonzentraten an Stelle von Pigmentpulvern zur Herstellung von Druckfarben ist bei Arylpararosanilinsulfonsäure-Pigmenten von besonderem Vorteil. Trocknet man nämlich die wäßrigen Pigmentpreßkuchen, wie es bei vielen anderen Pigmenten üblich ist, so bilden sich bei den genannten Arylpararosanilinsulfonsäurepigmenten wegen ihrer ausgeprägten Polarität harte Agglomerate, die sich nicht mehr durch normale mechanische Beanspruchung beim Anreiben auf einem Dreiwalzen-Stuhl zur Herstellung der entsprechenden Druckpasten zerlegen lassen. Die schlechte Dispergierbarkeit der Pigmente wirkt sich auf die Farbstärke, Homogenität, den Glanz und die Transparenz der Druckfarben ungünstig aus. Die getrockneten unpräparierten Arylpararosanilinsulfonsäure-Pigmente sind daher als solche für die Verwendung in Druckfarben unbrauchbar. Die geflushten Pigmente (Flushpasten) weisen diesen Nachteil bei geeigneter Wahl des Bindemittels nicht auf.

Die vorwiegend eingesetzten Bindemittel für den Flushprozeß von Arylpararosanilinsulfonsäure-Pigmenten bestehen aus einem Harzgemisch und hochsiedendem Mineralöl. Derartige Bindemittel sind in der DT-2354225-B2 (U.S.-Patent Nr. 3,950,288) beschrieben. Hierbei handelt es sich um Harzgemische in Mineralölen, wobei der Mineralölanteil zwischen 35-60 Gew.-% beträgt. Die Harzmischungen sind in ihrer Zusammensetzung so beschaffen, daß während des Knetvorganges beim Flushprozeß eine gute Pigmentbenetzung bewirkt wird. Allerdings dürfen die Benetzungseigenschaften dieser Harzmischung nicht so ausgeprägt sein, daß ein nennenswertes Emulgieren des bereits abgeschiedenen Wassers stattfindet, wodurch der Flushprozeß stark beeinträchtigt wird.

Die mit den erwähnten Bindemitteln hergestellten Flushpasten von Arylpararosanilinsulfonsäurepigmenten haben üblicherweise einen Pigmentgehalt von 40-45 % und eine Viskosität im Bereich von 30-70 Pascalsekunden (Pas), gemessen mit einem Fallstabviskosimeter. Viskositäten der Flushpasten im Bereich von 30-70 Pas haben sich in der Praxis weitgehend durchgesetzt, da sie einerseits eine gute Handhabung der Flushpasten gewährleisten und andererseits mit den so eingestellten Pasten Druckfarben für den Offsetdruck hergestellt werden können, welche den anwendungstechnischen Anforderungen bezüglich Rheologie, Zügigkeit, Wasserverträglichkeit und Verdruckbarkeit entsprechen.

Die Verwendung der genannten Flushpasten zur Druckfarbenherstellung ist jedoch auch mit Nachteilen verbunden. Beispielsweise hängt die Farbstärkeänderung bei Verdünnung der Flushpasten in einem Druckfirnis neben der Art des Druckfirnis auch noch von der Art und Menge des in der Flushpaste enthaltenen Bindemittels ab. Bedingt durch unterschiedliche Druckfarbenrezepte der Druckfarbenhersteller ist die Farbstärkeänderung bei Verdünnung der Flushpasten nicht einheitlich. Dieser Umstand kann zu erheblichen Rezepturproblemen bei der Druckfarbenherstellung führen, da die Rezepte meist auf einem

ganz bestimmten Farbstärke/Verdünnungs-Verhältnis basieren. Bei den bekannten Flushpasten, die mit Bindemitteln wie denen aus der DT-2354225-B2 hergestellt wurden, lassen die Möglichkeiten für eine Anpassung an die jeweiligen Erfordernisse in vielen Fällen zu wünschen übrig. Versucht man diese Eigenschaften der Flushpasten durch Verringerung des Pigmentgehalts und damit Erhöhung des Harzgehaltes zu variieren, so ändert sich die Rheologie der Flushpaste durch das in dem Harz produktionsbedingt enthaltene Mineralöl in Richtung geringerer Viskosität und Zügigkeit. Eine Verarbeitung von niedrig pigmentierten Flushpasten (weniger als 40 % Pigmentgehalt) zu einer auf den gebräuchlichen Offsetmaschinen verdruckbaren Druckfarbe durch die übliche Abmischung mit einem Druckfirnis ist dann nicht mehr möglich. Es entstehen äußerst dünne Druckfarben ohen Zügigkeit und mit sehr geringer Viskosität, die große Probleme beim Verdrucken, beim Wegschlagen ins Papier, beim Farbe/Wasser-Gleichgewicht, bei der Abriebfestigkeit und der Scheuerfestigkeit aufweisen.

Es besteht daher ein Bedarf an Flushpasten von Arylpararosanilinsulfonsäure-Pigmenten, welche in einem weiten Bereich von Pigmentgehalten herstellbar sind und damit eine bessere Anpassung an vorgegebene Eigenschaftsprofile, beispielsweise bezüglich Farbton, Farbstärke und Rheologie ermöglichen. Insbesondere sollen derartige Flushpasten mit niedrigem Pigmentgehalt nach Verdünnen mit einem üblichen Druckfirnis eine Druckfarbe mit einwandfreiem rheologischen Verhalten liefern.

Gegenstand der Erfindung sind pastenförmige Pigmentpräparationen, enthaltend

a) 5 bis 50 Gew.-% eines Pigments oder mehrerer Pigmente der allgemeinen Formel I

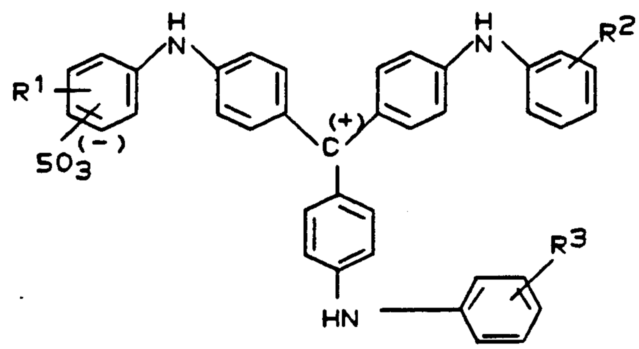

(I)

in welcher $R^1$, $R^2$ und $R^3$ unabhängig voneinander Wasserstoff, Halogen, wie Chlor oder Brom, $C_1$-$C_3$-Alkyl,$C_1$-$C_3$-Alkoxy oder Nitro bedeuten,

b) ein langöliges Alkydharz mit einem Ölgehalt von 70-80 Gew.-%, dessen Ölgehalt auf der Umsetzung mit einem trocknenden, halbtrocknenden oder nichttrocknenden Öl oder mit einem Gemisch mehrerer dieser Öle oder mit entsprechenden Fettsäuren basiert, dessen Dicarbonsäure-Komponente ein Gemisch aus Iso- und Ortho-Phthalsäure, einem geringen Anteil einer oder mehrerer $\alpha,\beta$-ungesättigter Dicarbonsäuren und gegebenenfalls Anhydriden der Dicarbonsäuren ist und dessen Polyalkohol-Komponente ein Gemisch aus Glycerin und Pentaerythrit enthält,

c) ein Kohlenwasserstoffharz mit einem mittleren Molekulargewicht im Bereich von 600 bis 1700, dessen Menge das 1-1,5-fache des Alkydharzes b beträgt,

d) ein phenolharzmodifiziertes Kolophoniumharz oder ein Cyclokautschukharz oder Kombinationen der beiden Harze sowie

e) Mineralöl.

Die erfindungsgemäßen Pigmentpräparationen enthalten 5-50, bevorzugt 20-38 Gew.-% Pigment, 20-45 Gew.-% eines Harzgemisches der oben definierten Komponenten b und c, 3-25 Gew.-%, vorzugsweise 5-15 Gew.-%, phenolmodifiziertes Kolophoniumharz oder Cyclokautschukharz oder Gemische der beiden Harze, sowie 10-40, insbesondere 15-25 Gew.-% Mineralöl.

Bevorzugte Pigmentpräparationen enthalten Pigmente der genannten allgemeinen Formel I, in der $R^1$, $R^2$ und $R^3$ unabhängig voneinander Wasserstoff, Methyl, Äthyl, n-oder iso-Propyl, insbesondere Wasserstoff oder Methyl bedeuten. Beispiele für Pigmente der Formel I sind die im Colour Index verzeichneten Pigment Blue 19, Pigment Blue 56, Pigment Blue 57 und Pigment Blue 61.

Die erfindungsgemäßen Pigmentpräparationen enthalten ein langöliges Alkydharz (Komponente b) mit einem Ölgehalt von 70-80 Gew.-%, vorzugsweise 75-77 Gew.-%, in Kombination mit der 1-1,5-fachen, vorzugsweise 1-1,25-fachen Menge eines Kohlenwasserstoffharzes oder mehrerer Kohlenwasserstoffharze mit einem mittleren Molekulargewicht im Bereich von 600-1700.

Die langöligen Alkydharze der Komponente b können in üblicher Weise als öl- oder fettsäuremodifizierte Polyester hergestellt werden, wobei Iso- und Ortho-Phthalsäure sowie geringe Anteile an einer $\alpha$, $\beta$-ungesättigten Dicarbonsäure oder mehreren mit einem Gemisch aus Glycerin und Pentaerythrit und Ölen oder Fettsäuren oder Kombinationen davon stufenweise oder in einem Schritt umgesetzt werden.

Geeignete Öle zur Herstellung der langöligen Alkydharze sind beispielsweise Leinöl, Rizinusöl, Kokosöl, Rizinenöl, Sonnenblumenöl, Baumwollsaatöl, Sojaöl, Erdnußöl, Tallöl und Talgöl, vorzugsweise Leinöl oder Rizinusöl, sowie Kombinationen der genannten Öle. Sofern Fettsäuren zur Herstellung der langöligen Alkydharze eingesetzt werden, sind beispielsweise Fettsäuren und Fettsäuregemische geeignet, die durch Verseifung der vorstehend genannten Öle erhältlich sind. Weiterhin geeignet sind geradkettige oder verzweigte gesättigte Fettsäuren mit 7-10 C-Atomen, Fettsäuren aus der Verseifung von Fetten, insbesondere Rindertalgfett, Harzsäuren, Benzoesäure, p-tert-Butylbenzoesäure und Kombinationen der genannten Säuren.

Sowohl bei den unter Verwendung der obengenannten Öle hergestellten Alkydharzen als auch bei den unter Verwendung der obengenannten Fettsäuren hergestellten Alkydharzen wird ein "Ölgehalt" angegeben. Dieser sogenannte Ölgehalt ist definiert als der auf das Alkydharz bezogene Gewichtsanteil der in Triglyceride umgerechneten modifizierenden Öle oder Fettsäuren, die bei der Herstellung des Alkydharzes verwendet werden.

Das Kohlenwasserstoffharz der Komponente c der erfindungsgemäßen Pigmentpräparationen kann aus einem Kohlenwasserstoffharz oder einem Gemisch von Kohlenwasserstoffharzen bestehen, wobei das mittlere Molekulargewicht jedes Harzes im Bereich von 600-1700 liegt. Vorzugsweise besteht das Kohlenwasserstoffharz der Komponente c aus einer Mischung zweier Kohlenwasserstoffharze, von denen das eine ein mittleres Molekulargewicht zwischen 600-1100 und dans andere ein mittleres Molekulargewicht zwischen 1400-1700 besitzt.

Geeignete Kombinationen von Harzen der Komponente b und c der erfindungsgemäßen Pigmentpräparationen sind aus der DT-2354225-B2 (U.S.-Patent Nr. 3,950,288) bekannt. Ihre Lösungen in Mineralöl sind zum Flushen wäßriger Preßkuchen der Pigmente der Formel I geeignet.

Als Komponente d der erfindungsgemäßen Pigmentpräparationen können phenolmodifizierte Kolophoniumharze eingesetzt weerden. Bevorzugte phenolmodifizierte Kolophoniumharze haben einen Schmelzpunkt von 110-180°C, insbesondere von 120-165 °C, eine Säurezahl im Bereich von etwa 20-110 und eine dynamische Viskosität nach DIN 53 177 von 50-450 mPas, insbesondere 50-230 mPas, (mPas = Millipascalsekunde) bei 20°C in 50 %iger Toluollösung. Geeignete kommerziell erhältliche Harze dieser Art sind beispielsweise ®ALBERTOL KP 626 (HOECHST AG), ®ALBERTOL KP 823, ®ALBERTOL KP 172, und ®ALBERTOL KP 330.

Als Komponente d können auch Cyclokautschukharze eingesetzt werden. Geeignete Cyclokautschukharze haben in der Regel einen Schmelzpunkt im Bereich von 100-150°C und eine dynamische Viskosität nach DIN 53 177 von 50-5000 mPas, vorzugsweise 100-180 mPas, (20°C, 50 %ige Lösung in Toluol) und eine Säurezahl von weniger als 5.

Als Komponente e der erfindungsgemäßen Pigmentpräparationen wird Mineralöl eingesetzt. Das Mineralöl kann aromatenhaltiges oder aromatenfreies Mineralöl sein und hat in der Regel einen Siedebereich zwischen 200 und 530 °C. Bevorzugt wird aromatenarmes Mineralöl eines Siedebereichs zwischen 240 und 325°C eingesetzt.

Die erfindungsgemäßen Pigmentpräparationen können neben den Komponenten a-e gegebenenfalls übliche Hilfsmittel als weitere Komponenten enthalten. Übliche Hilfsmittel sind beispielsweise Konservierungsmittel, wie Fungizide, oder Amine als Flushhilfsmittel.

Gegenstand der Erfindung ist auch das Verfahren zur Herstellung der erfindungsgemäßen Pigmentpräparation, die in wesentlichen die obengenannten Komponenten a-e enthalten, mit Flushen der wäßrigen Preßkuchen eines Pigments oder mehrerer der obengenannten Formel I, dadurch gekennzeichnet, daß die wäßrigen Preßkuchen des Pigments oder der Pigmente in Gegenwart einer Lösung einer Harzmischung in Mineralöl geflusht werden, wobei die Harzmischung aus einem Harz der in Komponente b definierten Art und der 1 bis 1,5fachen Menge eines Harzes der in Komponente c definierten Art besteht und das Mineralöl dem der Komponente e entspricht, und vor oder während der Entfernung des restlichen Wassers das Harz oder das Harzgemisch der Komponente d und gegebenenfalls weiteres Mineralöl entsprechend Komponente e und/oder weitere Lösung der Harzmischung aus den Harzen der Komponenten b und c in Mineralöl zugegeben und eingearbeitet werden sowie das restliche Wasser entfernt wird.

In der Regel wird so verfahren, daß man die wasserfeuchten Preßkuchen in an sich bekannter Weise mit Hilfe von Doppelmuldenknetern üblicher Bauart stufenweise mit einer Lösung der unter den Komponenten b und c aufgeführten Harze in Mineralöl flusht und die dabei abgeschiedene Wassermenge abtrennt. Das Verhältnis von Komponente b+c zu Komponente e liegt dabei vorzugsweise im Bereich von 4 zu 1 bis 0,7 zu 1, insbesondere 2,3 zu 1 bis 0,8 zu 1. Anschließend wird der entstandenen Pigmentpaste direkt im

Kneter die Menge des unter Komponente d aufgeführten Harzes zugegeben, die notwendig ist, um die gewünschten rheologischen Eigenschaften der Flushpaste einzustellen. Die notwendige Harzmenge wird am besten in Vorversuchen ermittelt, da sich die Viskosität und der Pigmentgehalt sowohl während der Einarbeitung der Harze als auch bei der Entfernung des restlichen Wassers verändert. Sollte die in der Pigmentpaste enthaltene Mineralölmenge nicht ausreichen, um das Harz der Komponente d in Lösung zu bringen, kann gegebenenfalls weiteres Mineralöl zugegeben werden. Auch kann das Harz der Komponente d als Lösung in Mineralöl zugegeben werden; dies sollte jedoch nur in Ausnahmefällen geschehen, weil dies produktionstechnisch in der Regel einen höheren Aufwand darstellt. Die Dosierung von Harz und gegebenenfalls weiterem Mineralöl muß so eingestellt werden, daß ein optimales Kneten und Zusammenhaften der Flushpaste jederzeit gewährleistet ist. Zum Einstellen eines niedrigen Pigmentgehalts der Flushpaste kann nach Einarbeiten des Harzes der Komponente d mit weiterem Mineralöl oder mit weiterer Lösung der Komponenten b und c in Mineralöl in gewissem Rahmen verdünnt werden.

Nach dem Flushen ist die Hauptmenge des Wassers, die in den wäßrigen Pigmentpreßkuchen enthalten war, abgeschieden. Die Entfernung des restlichen Wassers kann in üblicher Weise durch Anlegen von Vakuum erfolgen. Vorzugsweise laufen die Trocknung der Flushpaste und die Einarbeitung des Harzes der Komponente d parallel.

Gegenstand der Erfindung ist auch die Verwendung der erfindungsgemäßen Pigmentpräparationen zur Herstellung von Druckfarben. Die erfindungsgemäßen Flushpasten der Arylpararosanilinsulfonsäure-Pigmente zeichnen sich durch hervorragende Eigenschaften aus, die sie insbesondere für die Herstellung von Buch- und Offsetdruckfarben geeignet erscheinen lassen. So haben die Pigmentpräparationen in der Regel eine Zügigkeit im Bereich von 8-30, vorzugsweise 9-18 Inkometerwerten und ergeben nach Verdünnen in einem üblichen Druckfirnis Druckfarben mit einer Zügigkeit von 8-18, vorzugsweise 9-14 Inkometerwerten, wie sie für Buch-und Offsetdruckfarben gefordert werden. Als Maß der Zügigkeit wird dabei das Drehmoment angegeben, das von einer mit der Präparation versehenen Walze auf eine nichtangetriebene, anliegende Walze aufgrund der Zügigkeit der Präparation übertragen wird (1 Inkometerwert = 60 cm x Pond). Der Inkometerwert ist ein geräteabhängiger Wert und bezieht sich auf das Takometer "Inkomat" der Firma Prüfbau (München). Die Viskositäten der Druckfarben nach Verdünnen der Flushpasten im Verhältnis 1:1 mit einem üblichen Druckfirnis liegen vorzugsweise im Bereich von 10-50 Pas, insbesondere 20-40 Pas, und sind hervorragend zum Verdrucken auf Offsetdruckmaschinen geeignet.

Die erfindungsgemäßen Pigmentpräparationen sind gut lagerfähig. Auch nach längerer Lagerung bei 50-60 °C bleiben die Pigmentpräparationen im Bereich von 50-350 Pas viskositätsstabil und sind gut verarbeitbar. Die erfindungsgemäßen Pigmentpräparationen können mit Pigmentgehalten bis 50 Gew.-% hergestellt werden. Bevorzugt sind Pigmentgehalte von 20-38 Gew.-%. Durch Verwendung unterschiedlicher Mengen von Harzen der Komponente d kann die Abhängigkeit der Farbstärke von der Verdünnung bei Einarbeitung in einen Druckfirnis in weiten Bereichen gesteuert werden.

Die erfindungsgemäßen Pigmentpräparationen zeichnen sich durch sehr breite Verträglichkeit mit den für die verschiedenen Druckverfahren, wie Hochdruck und Flachdruck, in der Einfarben- oder Mehrfarbendrucktechnik in Frage kommenden, gebräuchlichen Bindemittel- bzw. Druckfarbensystemen aus. Sie lassen sich beispielsweise leicht in Bindemittelsysteme für Buchdruckfarben, Offsetdruckfarben, Heatset-Offsetdruckfarben oder Zeitungsrotationsfarben einarbeiten. Die mit den erfindungsgemäßen Präparationen pigmentierten Druckfarben sind einwandfrei zu verdrucken und liefern farbstarke glänzende Drucke. Die erfindungsgemäßen Pigmentpräparationen eignen sich auch in Mischung mit Schwarzpasten als Druckfarbe und weisen im Druck einen guten Glanz- und Schönungseffekt auf. Die Pigmentpräparationen sind auch geeignet zur Herstellung von Druckfarben für Durchschreibepapiere und Farbbänder.

In den folgenden Beispielen beziehen sich Teile und Prozentangaben auf das Gewicht, sofern nichts anderes angegeben ist. Für die Struktur der eingesetzten Pigmente ist in den Beispielen vereinzelt eine "idealisierte Formel" angegeben. In diesen Fällen enthält das eingesetzte Pigment ein Gemisch aus Triarylpararosanilinmonosulfonsäuren, die gemeinsam bei der Sulfonierung des entsprechenden Triarylpararosanilins entstehen und im Unterschied zueinander die Sulfogruppe an einem der strukturell verschiedenen endständigen Arylreste gebunden haben.

<u>Beispiel 1</u>

240 Teile des Pigments der Triphenylpararosanilinmonosulfonsäure der idealisierten Formel II

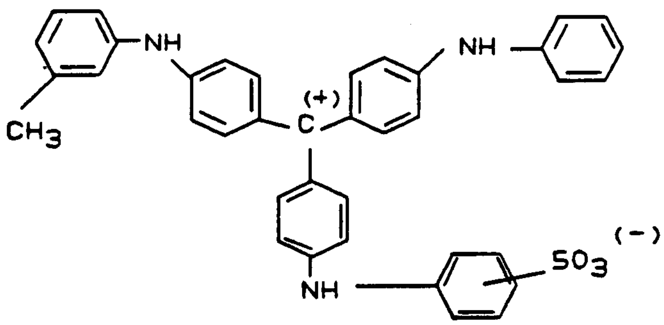

(II)

werden als wäßriger Preßkuchen (937 Teile) mit 25,6 Gew.-% Pigmentgehalt in einem Kneter mit sigmaförmigen Kneterschaufeln mit 250 Teilen einer ca. 70 %iger Flushharzlösung geflusht, wobei die Flushharzlösung analog dem Bindemittel A der DT-2354225-B2 (U.S.-Patent Nr. 3,950,288) hergestellt worden ist. Dabei werden zunächst 547 Teile des feuchten Preßkuchens mit 160 Teilen der 70 %igen Flushharzlösung verknetet und nach ca. 20 Minuten eine Wassermenge von 270 Teilen durch Kippen des Kneters abgetrennt. Nach Zugabe von 195 Teilen des feuchten Preßkuchens und langsames Eintropfen von 40 Teilen Flushharzlösung werden in einem zweiten Flush-Vorgang 70 Teile Wasser abgeschieden. Nach dem Abtrennen des Wassers wird unter Zugabe der restlichen 195 Teile des Preßkuchens sowie unter Zutropfen von 50 Teilen Flushharzlösung ein dritter Flushvorgang durchgeführt. Insgesamt werden auf diese Weise 84,6 % des mit dem Preßkuchen eingesetzten Wassers abgetrennt. In die nunmehr zähe Knetmasse werden 52 Teile eines phenolharzmodifizierten Kolophoniumharzes (® ALBERTOL KP 626) mit einem Schmelzbereich von 120-130 °C und einer Säurezahl von 34 unter Zutropfen von 140 Teilen einer Flushharzlösung der anfangs erwähnten Art eingeknetet und unter Anlegen von Vakuum das restliche Wasser abgezogen. Nach 6-7 Stunden Kneten im Vakuum ist die Paste weitgehend wasserfrei und das zugegebene Harz homogen in der Paste verteilt. Durch weitere, portionsweise Zugabe von 50 Teilen Flushharzlösung wird die Paste auf eine Viskosität von 170 Pas eingestellt. Der Pigmentgehalt der fertigen Paste beträgt etwa 33 %. Nach Verdünnen der Paste mit einem praxisgerechten Offsetdruckfarbenfirnis wird eine Druckfarbe mit der Viskosität von 26 Pas und einem Tack von 12,7 Inkometerwerten erhalten.

Beispiel 2 (Vergleichsbeispiel)

Man verfährt wie in Beispiel 1 beschrieben, doch mit dem Unterschied, daß man nach Abschluß der drei Flushvorgänge die Flushpaste mit der Flushharzlösung langsam herunterverdünnt. Bei einem Pigmentgehalt von weniger als 40 % ist die Viskosität der Paste so niedrig (< 20 Pas), daß beim Einstellen der Paste mit der gleichen Menge eines handelsüblichen Offsetdruckfirnis eine Druckfarbe erhalten wird, die völlig unzureichende rheologische Eigenschaften aufweist.

Auch durch nachträgliche Zugabe des in Beispiel 1 verwendeten erfindungsgemäßen Harzes der Komponente d zu der Druckfarbe werden nicht die Eigenschaften erhalten, die den in Beispiel 1 beschriebenen Eigenschaften der Druckfarbe bezüglich Rheologie und Farbstärkeverhalten bei Verdünnung entsprechen.

Beispiel 3

240 Teile des Pigments der Formel III

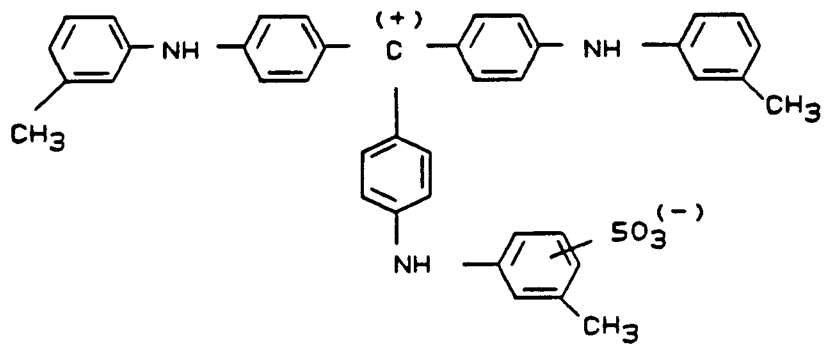

(III)

werden als wäßriger Preßkuchen (889 Teile) mit einem Pigmentgehalt von 27 % analog dem Verfahren von Beispiel 1 mit 280 Teilen Flushharzlösung geflusht. Nach Abschluß der Flushvorgänge werden der feuchten Paste 200 g eines Cyclokautschukharzes (Schmelzpunkt 115-125 °C, dynamische Viskosität 120-170 mPas in 50 %iger Toluollösung, Säurezahl < 2) und nach Maßgabe der Knetkonsistenz etwa 185 Teile Mineralöl zugesetzt. Nach ca. 5 Stunden im Vakuum ist die Paste trocken und das zugesetzte Cyclokautschukharz völlig gelöst. Es resultiert eine Flushpaste mit einer Viskosität von 140 Pas. Die Flushpaste läßt sich nach Verdünnung mit der gleichen Menge eines Druckfirnisses zu einer Druckfarbe verarbeiten, die eine Viskosität von 40 Pas und einen Tack von 14,8 Inkometerwerten besitzt und die sich hervorragend verdrucken läßt.

Beispiel 4

Man verfährt zunächst wie in Beispiel 1 beschrieben, wobei für die Flushvorgänge insgesamt 180 Teile der Flushharzlösung benötigt werden. Zu der wasserfeuchten Flushpaste gibt man 155 Teile eines Cyclokautschukharzes (Schmelzpunkt 128-143 °C, Viskosität 3-4,5 Pas, gemessen in 50 %iger Lösung in Testbenzin, Säurezahl < 2), das als 40 %ige Lösung in einem Mineralöl des Siedebereichs von 260-290 °C eingesetzt wird. Während der Trocknung durch Anlegung von Vakuum werden der Flushpaste nach Maßgabe der Viskosität 105 Teile der gleichen Harzlösung zugesetzt, die zum Flushen verwendet wurde. Nach etwa 4 Stunden ist die Paste wasserfrei und das Harz vollständig in der Paste verteilt. Es resultiert eine Flushpaste mit 35,2 % Pigmentgehalt und einer dynamischen Viskosität von 140 Pas.

Die Paste läßt sich mit einem üblichen Druckfarbenfirnis im Verhältnis 1:1 zu einer Druckfarbe mit einer Viskosität von 31 Pas und einem Tack von 13,4 Inkometerwerten verdünnen und ist hervorragend verdruckbar.

Beispiel 5

Man verfährt zunächst wie in Beispiel 1 beschrieben, wobei für die Flushvorgänge insgesamt 210 Teile der Flushharzlösung benötigt werden. Zu der wasserfeuchten Flushpaste gibt man 30 Teile eines Cyclokautschukharzes (Smp. 120-127 °C, Viskosität 130-170 mPas gemessen in 50 %iger Lösung in Toluol, Säurezahl < 2) und 60 Teile eines phenolharzmodifizierten Kolophoniumharzes (Smp. 140-150 °C, Säurezahl 32) und nach Maßgabe der Knetkonsistenz während des Trocknens im Vakuum zuerst 80 Teile der Flushharzlösung und dann noch 80 Teile aromatenarmes Mineralöl. Nach 7 Stunden im Vakuum ist die Paste völlig trocken und sind die beiden zugesetzten Harze gelöst. Es resultiert eine Flushpaste mit einer Viskosität von 210 Pas und einem Pigmentgehalt von 34,3 %. Die Paste hat nach Verdünnen mit der gleichen Menge eines üblichen Offsetdruckfirnis 31 Pas und einen Tack von 12,9 Inkometerwerten und ist hervorragend als Druckfarbe geeignet.

## Patentansprüche

**1.** Pastenförmige Pigmentpräparation, enthaltend

a) 5 bis 50 Gew.-% eines Pigments oder mehrerer Pigmente der allgemeinen Formel I

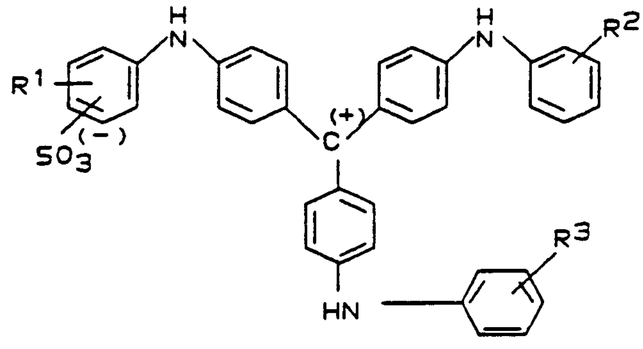

(I)

in welcher $R^1$, $R^2$ und $R^3$ unabhängig voneinander Wasserstoff, Halogen, wie Chlor oder Brom, $C_1$-$C_3$-Alkyl,$C_1$-$C_3$-Alkoxy oder Nitro bedeuten;
20 bis 45 Gew.-% eines Harzgemisches aus den nachfolgend in b) und c) definierten Harzen;
b) ein langöliges Alkydharz mit einem Ölgehalt von 70-80 Gew.-%, dessen Ölgehalt auf der Umsetzung mit einem trocknenden, halbtrocknenden oder nichttrocknenden Öl oder mit einem Gemisch mehrerer dieser Öle oder mit entsprechenden Fettsäuren basiert, dessen Dicarbonsäure-Komponente ein Gemisch aus Iso- und Ortho-Phthalsäure, einem geringen Anteil einer oder mehrerer $\alpha,\beta$-ungesättigter Dicarbonsäuren und gegebenenfalls Anhydriden der Dicarbonsäuren ist und dessen Polyalkohol-Komponente ein Gemisch aus Glycerin und Pentaerythrit enthält;
c) ein Kohlenwasserstoffharz mit einem mittleren Molekulargewicht im Bereich von 600 bis 1700, dessen Menge das 1-1,5-fache des Alkydharzes b beträgt;
d) 3-25 Gew.-% phenolmodifiziertes Kolophoniumharz oder Cyclokautschukharz oder Gemische beider Harze;
e) 10-40 Gew.-% Mineralöl,

**2.** Pigmentpräparation nach Anspruch 1, gekennzeichnet durch
a) 20-38 Gew.-% Pigment,
b und c) 20-45 Gew.-% eines Harzgemisches aus den in Anspruch 1 definierten Harzen der Komponenten b und c,
d) 3-25 Gew.-% phenolmodifiziertes Kolophoniumharz oder Cyclokautschukharz oder Gemische beider Harze,
e) 10-40 Gew.-% Mineralöl

**3.** Pigmentpräparation nach Anspruch 1 oder 2, gekennzeichnet durch ein phenolharzmodifiziertes Kolophoniumharz der Komponente d, das eine dynamische Viskosität von 50-450 mPas, vorzugsweise 50-230 mPas besitzt.

**4.** Pigmentpräparation nach Anspruch 1 oder 2, gekennzeichnet durch ein Cyclokautschukharz der Komponente d, das eine dynamische Viskosität von 50-5000, vorzugsweise 100-180 mPas besitzt.

**5.** Verfahren zur Herstellung einer nach einem oder mehreren der Ansprüche 1 bis 4 definierten Pigmentpräparation, die im wesentlichen die obengenannten Komponenten a-e enthält, mit Flushen der wäßrigen Preßkuchen eines Pigments oder mehrerer der obengenannten Formel I, dadurch gekennzeichnet, daß die wäßrigen Preßkuchen des Pigments oder der Pigmente in Gegenwart einer Lösung einer Harzmischung in Mineralöl geflusht werden, wobei die Harzmischung aus einem Harz der in Komponente b definierten Art und der 1 bis 1,5fachen Menge eines Harzes der in Komponente c definierten Art besteht und das Mineralöl dem der Komponente e entspricht, und vor oder während der Entfernung des restlichen Wassers das Harz oder das Harzgemisch der Komponente d und gegebenenfalls weiteres Mineralöl entsprechend Komponente e und/oder weitere Lösung der Harzmischung aus den Harzen der Komponenten b und c in Mineralöl zugegeben und eingearbeitet werden sowie das restliche Wasser entfernt wird.

**6.** Verfahren nach Anspruch 5, dadurch gekennzeichnet, daß das Entfernen des restlichen Wassers durch Trocknen im Vakuum erfolgt, wobei die Vermischung des Harzes oder der Harze der Komponente d gleichzeitig mit dem Trocknen durchgeführt wird.

**7.** Verwendung einer nach einem oder mehreren der Ansprüche 1 bis 4 definierten Pigmentpräparation zum Pigmentieren von Druckfarben.

**8.** Verwendung nach Anspruch 7, dadurch gekennzeichnet, daß die Druckfarbe eine Offsetdruckfarbe ist.

**9.** Verwendung nach Anspruch 7 oder 8, dadurch gekennzeichnet, daß die Druckfarbe eine Zügigkeit im Bereich von 8 bis 18 Inkometerwerten, vorzugsweise im Bereich von 9 bis 14 Inkometerwerten besitzt.

**10.** Verwendung nach einem oder mehreren der Ansprüche 7 bis 9, dadurch gekennzeichnet, daß die Druckfarbe eine Viskosität im Bereich von 10 bis 50 Pas, vorzugsweise im Bereich von 20 bis 40 Pas besitzt.

**Claims**

**1.** A pasty pigment formulation containing

a) 5 to 50% by weight of one or more pigments of the general formula I

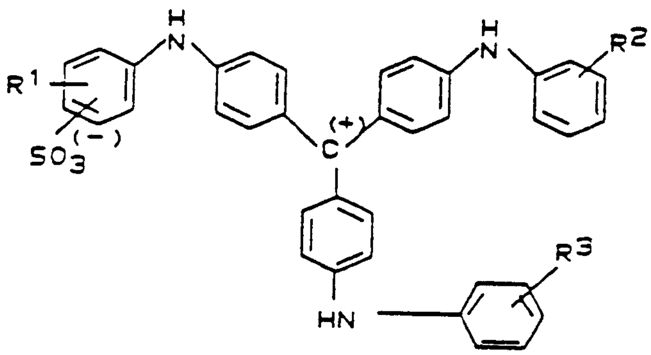

(I)

in which $R^1$, $R^2$ and $R^3$ independently of each other denote hydrogen, halogen, such as chlorine or bromine, $C_1$-$C_3$-alkyl, $C_1$-$C_3$-alkoxy or nitro,

20-45% by weight of a resin mixture of the resins hereinafter defined in b) and c),

b) a long-oil alkyd resin having an oil content of 70-80% by weight whose oil content is based on the reaction with a drying, semidrying or nondrying oil or with a mixture of a plurality of these oils or with corresponding fatty acids whose dicarboxylic acid component is a mixture of isophthalic acid and orthophthalic acid, a small proportion of one or more $\alpha,\beta$-unsaturated dicarboxylic acids and, possibly, anhydrides thereof and whose poly-alcohol component contains a mixture of glycerol and pentaerythritol,

c) a hydrocarbon resin having an average molecular weight within the range from 600 to 1700, the amount of which is 1-1.5 times that of alkyd resin b,

d) 3-25% by weight of phenol-modified colophony resin or cyclorubber resin or mixtures of the two resins and

e) 10-40% by weight of mineral oil.

**2.** A pigment formulation as claimed in claim 1, containing

a) 20-38% by weight of pigment,

b and c) 20-45% by weight of a resin mixture of the resins of component b and c defined in claim 1,

d) 3-25% by weight of phenol-modified colophony resin or cyclorubber resin or mixtures of the two resins,

e) 10-40% by weight of mineral oil.

**3.** A pigment formulation as claimed in claim 1 or 2, containing a phenol-modified colophony resin of component d which has a dynamic viscosity of 50-450 mPas, preferably 50-230 mPas.

**4.** A pigment formulation as claimed in claim 1 or 2, containing a cyclorubber resin of component d which has a dynamic viscosity of 50-5000, preferably 100-180, mPas.

5. A process for producing a pigment formulation as defined in one or more of claims 1 to 4, containing essentially the abovementioned components a-e, by flushing the aqueous presscakes of one or more pigments of the abovementioned formula I, which comprises flushing the aqueous presscakes of the pigment or pigments in the presence of a solution of a resin mixture in mineral oil, the resin mixture comprising a resin of the type defined as component b and 1 to 1.5 times the amount of a resin of the type defined as component c and the mineral oil conforming to component e, and before or during the removal of the remaining water adding, and incorporating, the resin or the resin mixture of component d with or without further mineral oil conforming to component e and/or further solution of the resin mixture of the resins of components b and c in mineral oil, and removing the remaining water.

6. The process as claimed in claim 5, wherein the remaining water is removed by drying under reduced pressure and the mixing of the resin or resins of component d being carried out simultaneously with the drying.

7. The use of a pigment formulation as defined in one or more of claims 1 to 4 for pigmenting printing inks.

8. The use as claimed in claim 7, wherein the printing ink is an offset printing ink.

9. The use as claimed in claim 7 or 8, wherein the printing ink has a tackiness within the range from 8 to 18 inkometer points, preferably within the range from 9 to 14 inkometer points.

10. The use as claimed in one or more of claims 7 to 9, wherein the printing ink has a viscosity within the range from 10 to 50 Pas, preferably within the range from 20 to 40 Pas.

**Revendications**

1. Préparation de pigments en forme de pâte, contenant :
a) 5 à 50 % en poids d'un pigment ou de plusieurs pigments répondant à la formule générale I :

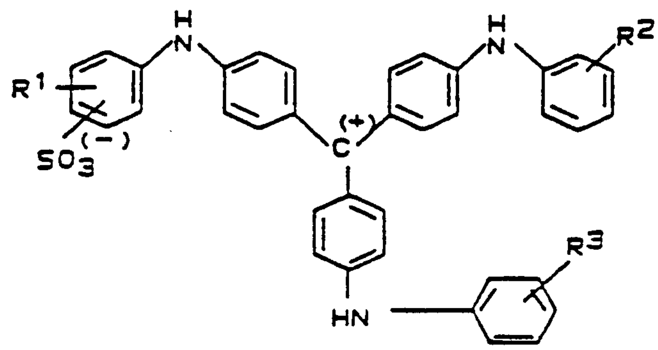

(I)

dans laquelle $R^1$, $R^2$ et $R^3$ représentent chacun, indépendamment l'un de l'autre, un atome d'hydrogène, un atome d'halogène comme le chlore ou le brome, un groupe alkyle en $C_1$ à $C_3$, alcoxy en $C_1$ à $C_3$ ou nitro ;

20 à 45 % en poids d'un mélange de résines choisies parmi les résines définies en b) et c) ci-après :

b) une résine alkyde longue en huile, ayant une teneur en huile de 70 à 80 % en poids, dont l'huile contenue est fondée sur la réaction avec une huile siccative, semi-siccative ou non siccative ou avec un mélange de plusieurs de ces huiles ou avec des acides gras correspondants, dont le constituant acide dicarboxylique est un mélange d'acide isophtalique, d'acide orthophtalique, de faibles quantités d'un ou plusieurs acides dicarboxyliques à insaturation en alpha-bêta et éventuellement d'anhydride des acides dicarboxyliques, et dont le constituant polyalcool est un mélange de glycérol et de pentaérythritol ;

c) une résine hydrocarbonée ayant un poids moléculaire moyen compris entre 500 et 1700, dont la quantité représente une à 1,5 fois la quantité de la résine alkyde b) ;

d) 3 a 25 % en poids d'une résine de colophane modifiée par du phénol ou d'une résine de

caoutchouc cyclique ou de mélanges des deux résines ;
e) 10 à 40 % en poids d'une huile minérale.

2. Préparation de pigments selon la revendication 1, caractérisée par la présence de :
a) 20 à 38 % en poids de pigments ;
b) et c) 20 à 45 % en poids d'un mélange des résines des constituants b) et c) définies à la revendication 1 ;
d) 3 à 25 % en poids d'une résine de colophane à modification phénolique ou d'une résine de caoutchouc cyclique ou d'un mélange des deux résines ;
e) 10 à 40 % en poids d'une huile minérale.

3. Préparation des pigments selon la revendication 1 ou 2, caractérisée en ce qu'elle comporte comme constituant d) une résine de colophane modifiée par une résine phénolique et qui possède une viscosité de 50 à 450 mPa.s, avantageusement de 50 à 230 mPa.s.

4. Préparation des pigments selon la revendication 1 ou 2, caractérisée en ce qu'elle comporte une résine de caoutchouc cyclique formant le constituant d) et qui possède une viscosité dynamique de 50 à 5000, avantageusement de 100 à 180 mPa.s.

5. Procédé pour fabriquer une préparation de pigments définie selon une ou plusieurs des revendications 1 à 4, qui contient essentiellement les constituants a) à e) précités, par traitement "Flush" de balayage ou rinçage du gâteau aqueux de compression d'un pigment ou de plusieurs pigments répondant à la formule I précitée, procédé caractérisé en ce qu'on traite le gâteau aqueux de compression du pigment ou des pigments, en présence d'une solution d'un mélange de résines dans de l'huile minérale, le mélange des résines étant constitué d'une résine de la nature définie pour le constituant b) et d'une quantité de 1 à 1,5 fois d'une résine de la nature définie pour le constituant c), et en ce que l'huile minérale correspond à celle du constituant e) et, avant ou pendant l'élimination de l'eau restante, on ajoute la résine ou le mélange des résines du constituant d) et éventuellement un supplément d'eau minérale correspondant au constituant e) et/ou un supplément de solution du mélange des résines des constituants b) et c) dans de l'huile minérale, et on les incorpore cependant que l'on élimine le reste de l'eau.

6. Procédé selon la revendication 5, caractérisé en ce que l'élimination de l'eau restante est réalisée par séchage sous dépression, le mélangeage de la résine ou des résines du constituant d) étant conduit en même temps que le séchage.

7. Utilisation d'une préparation de pigments, définie selon une ou plusieurs des revendications 1 à 4, pour pigmenter des encres d'impression.

8. Utilisation selon la revendication 7, caractérisée en ce que l'encre d'impression est une encre pour impression offset.

9. Utilisation selon la revendication 7 ou 8, caractérisée en ce que l'encre d'impression a une adhésivité se situant entre 8 et 18 unités d'inkomètre, avantageusement entre 9 et 14 unités d'inkomètre.

10. Utilisation selon une ou plusieurs des revendications 7 à 9, caractérisée en ce que l'encre d'impression a une viscosité comprise entre 10 et 50 Pa.s, avantageusement entre 20 et 40 Pa.s.